# EUROPÄISCHE PATENTANMELDUNG

(11) **EP 2 357 367 A1**
(43) Veröffentlichungstag der Anmeldung: **17.08.2011**
(21) Anmeldenummer: 11153338.6
(22) Anmeldetag: 04.02.2011
(51) Int. Cl.: F16B 5/06, F16B 5/12, F16B 7/04

(54) **Montagesysteme für Platten und Rohre**

(30) Priorität: 16.02.2010 DE 202010000208 U
(71) Anmelder: Gust. Alberts GmbH & Co. KG, 58849 Herscheid (DE)
(72) Erfinder: Alberts, Dietrich, 58849, Herscheid (DE)
(74) Vertreter: Beckmann, Jürgen

(57) **Zusammenfassung**

Die Erfindung betrifft ein Platten/Rohr-Montagesystem (301), in welchem ein Plattenmontagesystem und ein Rohrmontagesystem (201) kombiniert sind. Das Plattenmontagesystem umfasst dabei ein Grundprofil (GPe) mit einem Stamm und mindestens einem davon abstehenden Flügel sowie ein Klemmprofil, das am Flügel befestigt werden kann und dabei zwischen sich und dem Flügel eine Platte einklemmen kann. Das Rohrmontagesystem (201) umfasst einen Verbinder mit mindestens einem Zapfen, auf den ein Rohr aufgesteckt werden kann, wobei mindestens ein Zusatzzapfen optional am Verbinder befestigt werden kann. Des Weiteren kann der Verbinder mindestens eine Blende enthalten, mit welcher Bauteile abgedeckt werden können.

## Beschreibung

Die Erfindung betrifft ein Plattenmontagesystem für Platten mit einem Grundprofil und einem Klemmprofil. Ferner betrifft sie ein Rohrmontagesystem mit Verbindern zum Koppeln von Rohren. Darauf aufbauend gehört zur Erfindung ein Platten/Rohr-Montagesystem enthaltend das genannte Plattenmontagesystem und das genannte Rohrmontagesystem.

Aus der DE 200 06 784 U1 ist eine Anordnung bekannt, bei welcher zwei L-förmige Profilteile über im Knickbereich angeordnete Rastmittel miteinander verbunden werden und dabei zwischen ihren Schenkeln Platten einklemmen können.

Des Weiteren ist aus der DE 20 2008 002 264 U1 eine Haltevorrichtung für Platten bekannt, bei welcher zwei identisch ausgebildete Profilteile über einen elastischen Block miteinander gekoppelt werden und dabei zwischen ihren Schenkeln eine Platte einklemmen können.

Schließlich sind von der Firma Gust. Alberts GmbH & Co. KG (Herscheid) Rohrverbinder bekannt, die zwei oder mehr rechtwinklig zueinander angeordnete Zapfen enthalten, auf welche dazu passende (Quadrat-)Rohre gesteckt werden können.

Vor diesem Hintergrund war es Aufgabe der vorliegenden Erfindung, alternative Montagemittel zur Kopplung von Rohren und/oder Platten bereitzustellen.

Diese Aufgabe wird durch ein Plattenmontagesystem mit den Merkmalen des Anspruchs 1, durch ein Rohrmontagesystem mit den Merkmalen des Anspruchs 9 bzw. 11, sowie durch ein Platten/Rohr-Montagesystem mit den Merkmalen des Anspruchs 15 gelöst. Vorteilhafte Ausgestaltungen sind in den Unteransprüchen enthalten.

Gemäß ihrem ersten Aspekt betrifft die Erfindung ein Plattenmontagesystem für Platten, wobei unter dem Begriff "Platte" ganz allgemein ein plattenförmiges Element wie beispielsweise eine Spanplatte, Sperrholzplatte, Kunststoffplatte, Tischplatte, Glasplatte etc. verstanden werden soll. Das Plattenmontagesystem enthält die folgenden Komponenten:
- Ein Grundprofil, welches im Querschnitt gesehen einen Stamm und mindestens einen davon abstehenden Flügel aufweist. Unter einem "Stamm" soll dabei in einem allgemeinen Sinn ein kompakter, verdickter Teil des Grundprofils verstanden werden, während der "Flügel" sich im Wesentlichen gradlinig und flach erstreckt. Die konkreten Gestaltungen von Stamm oder Flügel können jedoch sehr verschieden sein. Vorzugsweise ist das Grundprofil einstückig. Der Stamms des Grundprofils liegt vorteilhafterweise in derselben Ebene bzw. Schicht wie die zu montierende Platte.
- Ein Klemmprofil, das am vorstehend genannten Flügel des Grundprofils befestigt werden kann und dabei zwischen sich und dem Flügel eine Platte einklemmen kann.

Durch die Befestigung des Klemmprofils am Flügel des Grundprofils steht der Stamm des Grundprofils vorteilhafterweise als eigenständiges Element zur Verfügung, mit welchem der Randabschluss der Platte gestaltet werden kann.

Wie der Ausdruck "Profil" andeutet, sind das Grundprofil und das Klemmprofil in Richtung einer Längserstreckung im Wesentlichen mit überall gleichem Querschnitt ausgebildet. Die Profile werden typischerweise aus Kunststoff und/oder Metall in einem Extrusionsverfahren hergestellt.

Gemäß einer bevorzugten Ausführungsform des Plattenmontagesystems erstreckt sich der Stamm des Grundprofils von der (Erstreckungs-) Ebene des Flügels (die im allgemeinen parallel zur Ebene einer eingesetzten Platte liegt) mindestens so weit wie das in Montagestellung am Flügel befestigte Klemmprofil hiervon absteht. Bezogen auf die Ebene einer eingesetzten Platte ist der Stamm somit mindestens so dick wie der Sandwich-Aufbau "Flügel-Platte-Klemmprofil". Dies hat den Vorteil, dass der Stamm des Grundprofils die Stirnflächen der Platte vollständig verdeckt und sauber abschließt.

Der Stamm des Grundprofils kann im Prinzip eine beliebige Querschnittsform haben. Insbesondere könnte er beispielsweise einen massiv ausgebildeten Querschnitt und/oder einen U- oder C-förmigen, offenen Querschnitt haben. Gemäß einer besonders bevorzugten Ausführungsform des Plattenmontagesystems wird der Stamm durch ein Rohr gebildet. Der Rohrquerschnitt kann beispielsweise rund, rechteckig, quadratisch oder polygonal sein. Die Ausbildung des Stammes als ein Rohr bietet die Möglichkeit, mehrere Grundprofile über ein Stecksystem miteinander zu verbinden.

Die Verbindung zwischen dem Klemmprofil und dem Flügel des Grundprofils kann prinzipiell auf beliebige Art hergestellt werden, beispielsweise durch Verkleben. Besonders bevorzugt ist es, wenn am Flügel erste Verbindungsmittel und am Klemmprofil dazu kompatible zweite Verbindungsmittel ausgebildet sind, über welche eine formschlüssige und/oder kraftschlüssige Verbindung herstellbar ist.

Die ersten und die zweiten Verbindungsmittel können insbesondere eine Rastverbindung und/oder eine Schraubverbindung zwischen dem Klemmprofil und dem Grundprofil realisieren. Vorteilhafterweise sind diese beiden Verbindungsarten gleichzeitig vorgesehen, wobei die Rastverbindung für eine leicht herstellbare Vormontage eingesetzt werden kann und die Schraubverbindung zur dauerhaften Fixierung der Vormontage.

Zur Erzeugung der genannten Rastverbindung können die ersten und/oder die zweiten Verbindungsmittel mindestens eine Wand enthalten, welche mindestens einen Rastvorsprung aufweist. Dieser Rastvorsprung kann dann mit einer korrespondierenden Ausnehmung bzw. einem korrespondierenden Rastvorsprung am anderen Verbindungsmittel zusammenwirken.

Die oben genannte Schraubverbindung kann beispielsweise realisiert werden, indem die ersten und/oder die zweiten Verbindungsmittel einen zwischen zwei Wänden ausgebildeten Schraubkanal zur Aufnahme einer Verbindungsschraube aufweisen. Dieser Schraubkanal kann an seiner Innenseite vorzugsweise Rillen zur Aufnahme eines Schraubengewindes tragen.

Die ersten und/oder die zweiten Verbindungsmittel können optional zwei voneinander beabstandete Stege aufweisen. Derartige Stege können beispielsweise den erwähnten Rastvorsprung zur Herstellung einer Rastverbindung beinhalten oder auch den erwähnten Schraubkanal realisieren.

Bei einer weiteren bevorzugten Ausführungsform der Erfindung enthalten die ersten und zweiten Verbindungsmittel Kippmittel, welche einem Drehmoment entgegenwirken, das von einer in das Plattenmontagesystem eingesetzten Platte auf das Klemmprofil ausgeübt wird. Ein solches Drehmoment entsteht dadurch, dass die von dem Flügel des Grundprofils und dem Klemmprofil auf eine Platte ausgeübte Presskraft senkrecht zur Plattenebene wirkt und die Verbindung zwischen Klemmprofil und Flügel andererseits außerhalb der Platte liegt, d. h. senkrecht versetzt gegenüber der Wirkungslinie der Presskraft. Aus diesem Grund wirkt die Presskraft als ein Drehmoment an der Verbindungsstelle zwischen Klemmprofil und Grundprofil. Werden die ersten und zweiten Verbindungsmittel völlig symmetrisch ausgebildet, so kann das nur einseitig von der Platte her wirkende Drehmoment ein Verkippen des Klemmprofils gegenüber dem Grundprofil erzeugen. Dieser nachteilige Effekt kann durch die genannten Kippmittel verhindert werden. Die Kippmittel beruhen dabei typischerweise auf einer konstruktiven Abweichung von der Symmetrie der ersten und zweiten Verbindungsmittel.

Gemäß einer bevorzugten Ausführungsform enthalten die genannten Kippmittel ein Kontaktelement, beispielsweise einen Vorsprung oder eine Nase, über welches das Klemmprofil den Stamm des Grundprofils kontaktiert. Auf diese Weise wird eine Abstützung des Klemmprofils am Stamm des Grundprofils möglich, durch welche das Platten-Drehmoment neutralisiert werden kann. Wenn wie oben erläutert das erste und/oder zweite Verbindungsmittel zwei beabstandete Stege aufweist, kann das Kippmittel auch eine asymmetrische Ausbildung mindestens eines der Stege umfassen, insbesondere eine im Querschnitt konische Ausbildung des Steges. Auch auf diese Weise lässt sich eine Asymmetrie der Verbindungsmittel erzeugen, mit der dem einseitigen Drehmoment entgegengewirkt werden kann.

Bei einer anderen Weiterbildung des Plattenmontagesystems weist das Grundprofil und/oder das Klemmprofil einen Anschlag für eine zu haltende Platte auf. Der Einschub einer Platte in dem Klemmspalt zwischen Flügel und Klemmprofil kann auf diese Weise an einer definierten Position beendet werden, wodurch das Einhalten von Montagemaßen erleichtert wird.

Das Klemmprofil ist typischerweise in gewissen Grenzen stufenlos verstellbar am Grundprofil befestigbar, so dass der zwischen Klemmprofil und Flügel ausgebildete Klemmspalt eine variable Breite hat und Platten verschiedener Stärke aufnehmen kann. Um den Variationsbereich hinsichtlich der Spaltbreite bzw. Plattenstärke weiter zu erhöhen, kann das Klemmprofil und/oder das Grundprofil optional einen Füllkörper aufweisen. Ein solcher Füllkörper kann beispielsweise als ein separates Teil vorgesehen sein, das bei Bedarf am Klemmprofil oder Grundprofil befestigt wird, um eine (zu) große Spaltbreite zu verkleinern. Besonders bevorzugt ist es, wenn zwei oder mehr Typen von Grundprofil oder Klemmprofil vorgesehen werden, welche sich durch die Dicke des damit integral ausgebildeten Füllkörpers (bzw. das kompletten Fehlen eines solchen Füllkörpers) unterscheiden. Je nach zu verarbeitender Plattenstärke kann dann das passende Profil verwendet werden, ohne dass eine gesonderte Anbringung eines Füllkörpers notwendig wäre.

Gemäß einem zweiten Aspekt betrifft die Erfindung ein Rohrmontagesystem, welches einen Verbinder mit mindestens einem Zapfen enthält, auf den ein Rohr aufgesteckt werden kann. Typischerweise enthält der Verbinder zwei oder mehr derartige Zapfen, so dass er der Kopplung von mehreren Rohren dienen kann. Das Rohrmontagesystem ist gekennzeichnet durch mindestens einen Zusatzzapfen, welcher optional (wahlweise) am Verbinder befestigt werden kann.

Das beschriebene Rohrmontagesystem hat den Vorteil, dass aus wenigen Grundelementen, nämlich dem Verbinder und einem oder mehreren (typischerweise gleichartigen) Zusatzzapfen, eine Vielzahl von räumlich verschieden konfigurierten Verbindungskörpern hergestellt werden kann. Dies verringert zum einen die Herstellungskosten durch die Beschränkung auf wenige Grundformen. Zum anderen wird die Verwendung des Rohrmontagesystems erleichtert, da der Anwender nicht bereits in der Planungsphase für den Zusammenbau eines Gegenstandes (z. B. eines Schrankes) alle benötigten Verbindungskörper vorab festlegen und beschaffen muss. Vielmehr kann er im Zuge der Bauarbeiten die jeweils benötigte Verbinderkonfiguration an Ort und Stelle aus den Grundelementen (Verbinder, Zusatzzapfen) zusammensetzen.

Im einfachsten Falle kann der Zusatzzapfen in nur einer bestimmten, vorgegebenen Position am Verbinder befestigt werden. Vorzugsweise ist indes vorgesehen, dass der Zusatzzapfen in zwei oder mehr verschiedenen Positionen am Verbinder befestigt werden kann, wodurch sich die Zahl der zusammensetzbaren Konfigurationen erheblich erhöht.

Gemäß einer anderen Ausführungsform des Rohrmontagesystems kann vorgesehen sein, dass wahlweise ein oder mehrere Zusatzzapfen am Verbinder befestigt werden können. Je nach Auswahl von Zahl (und Ort) der angebrachten Zusatzzapfen können dann verschiedene Verbindungskörper hergestellt werden.

Die Befestigung des Zusatzzapfens am Verbinder kann auf verschiedene Weisen erfolgen, beispielsweise durch eine Klebverbindung oder Rastverbindung. Besonders bevorzugt ist eine Schraubverbindung zwischen Zusatzzapfen und Verbinder, da hierdurch eine hohe Festigkeit erreicht werden kann bei gleichzeitiger Demontierbarkeit. Für die Schraubverbindung könnte der Zusatzzapfen beispielsweise ein angeformtes Gewinde und der Verbinder ein entsprechendes Innengewinde aufweisen (oder umgekehrt). Alternativ können an Zusatzzapfen und/oder Verbinder auch nur Durchgangslöcher vorgesehen sein, durch welche eine separate Schraube geführt werden kann, um Zusatzzapfen und Verbinder über eine Schraube-Mutter-Verbindung miteinander zu koppeln.

Gemäß einem dritten Aspekt betrifft die Erfindung ein zweites Rohrmontagesystem, bei dem es sich insbesondere um ein Rohrmontagesystem der oben beschriebenen Art (mit Zusatzzapfen) handeln kann. Das zweite Rohrmontagesystem enthält wiederum einen Verbinder mit mindestens einem Zapfen, auf den ein Rohr aufgesteckt werden kann. Weiterhin enthält es eine Blende, mit welcher mit dem Verbinder gekoppelte Bauteile zumindest teilweise abgedeckt werden können. Typischerweise ist die Blende im Wesentlichen flach bzw. plattenförmig ausgebildet und hat einen einfachen Grundriss, beispielsweise den eines Quadrates.

Das zweite Rohrmontagesystem hat den Vorteil, dass mit Hilfe der Blende die Stoßfugen von Rohren, Platten etc. im Bereich des Verbinders verdeckt werden können. Hierdurch lässt sich eine optisch ansprechendere Gestaltung erzielen. Ferner wird die Ausbildung von Schmutzfugen verhindert.

Gemäß einer bevorzugten Ausführungsform des zweiten Rohrmontagesystems ist die Blende (bzw. mindestens eine von mehreren Blenden) einstückig mit dem Verbinder ausgebildet. Hierdurch lässt sich ein optisch besonders gleichmäßiges Aussehen unter Vermeidung jeglicher Fuge zwischen Blende und Verbinder erzielen. Des Weiteren sind mit der "normalen" Montage gleichzeitig alle Blenden installiert.

Gemäß einer anderen Ausführungsform des zweiten Rohrmontagesystems ist die Blende (bzw. mindestens eine von mehreren Blenden) als ein separates Bauelement ausgebildet, das Mittel zur Verbindung mit dem Verbinder und/oder mit einem damit gekoppelten Bauteil aufweist. In diesem Falle kann die Blende variabel eingesetzt werden. Dies ist zum Beispiel vorteilhaft, wenn es sich gleichzeitig um ein Rohrmontagesystem gemäß dem zweiten Aspekt der Erfindung handelt, d. h. mit der Möglichkeit, Zusatzzapfen am Verbinder zu befestigen. Je nach Vorhandensein und/oder Position der Zusatzzapfen kann dann die separate Blende zum Einsatz kommen.

Es sei darauf hingewiesen, dass die vorstehenden Ausführungsformen miteinander kombiniert werden können, d. h. dass sowohl mindestens eine einstückig mit dem Verbinder ausgebildete Blende als auch gleichzeitig mindestens eine separate Blende vorhanden sein kann.

Das Plattenmontagesystem gemäß dem ersten Aspekt der Erfindung sowie die Rohrmontagesysteme gemäß dem zweiten und dritten Aspekt der Erfindung wurden oben als eigenständige Einrichtungen beschrieben, da sie unabhängig voneinander verwendet werden können. Ein besonderer Vorteil ergibt sich jedoch durch eine kombinierte Verwendung. Dies wird möglich, wenn
- der Stamm des Grundprofils des Plattenmontagesystems rohrförmig ist, und
- der Zapfen des Verbinders und/oder (falls vorhanden) der Zusatzzapfen zum Einstecken in den rohrförmigen Stamm eingerichtet ist.

Die mit dem Rohrmontagesystem gekoppelten Rohre können in diesem Fall (unter anderem) die Grundprofile aus des Plattenmontagesystems sein, wobei an diesen Grundprofilen wiederum Platten befestigt werden können. Bei dieser Kombination von Plattenmontagesystem und Rohrmontagesystem entsteht somit ein "Platten/Rohr-Montagesystem", das einen vierten Aspekt der vorliegenden Erfindung darstellt.

Bei dem genannten Platten/Rohr-Montagesystem ist vorzugsweise als separates Bauelement eine Blende vorhanden, welche Mittel zur Verbindung mit dem Grundprofil und/oder dem Klemmprofil des Plattenmontagesystems aufweist. Insbesondere können diese Mittel an der Blende dazu eingerichtet sein, mit ersten oder zweiten Verbindungsmitteln am Grundprofil bzw. Klemmprofil zusammenzuwirken, die normalerweise für die Verbindung zwischen Grundprofil und Klemmprofil dienen.

Im Folgenden wird die Erfindung beispielhaft mit Hilfe der beigefügten Figuren erläutert. Darin zeigt:
- Fig. 1: eine Explosionsdarstellung eines ersten erfindungsgemäßen Plattenmontagesystems mit einem Verbindungs-Grundprofil und zwei Platten unterschiedlicher Stärke;
- Fig. 2a: einen Querschnitt durch das Plattenmontagesystem von Figur 1;
- Fig. 2b: einen Querschnitt durch das Plattenmontagesystem von Figur 1 im montierten Zustand;
- Fig. 3: Querschnitte durch das Plattenmontagesystem von Figur 1 mit teilweise aufgesetzten Klemmprofilen (oben) und ganz aufgesetzten Klemmprofilen (unten) sowie vergrößerten Details hieraus (rechts);
- Fig. 4: einen separaten Querschnitt und eine separate perspektivische Ansicht des Klemmprofils von Figur 1 für dicke Platten;
- Fig. 5: einen separaten Querschnitt und eine separate perspektivische Ansicht des Klemmprofils von Figur 1 für dünne Platten;
- Fig. 6: einen separaten Querschnitt und eine separate perspektivische Ansicht des Verbindungs-Grundprofils von Figur 1;
- Fig. 7: einen separaten Querschnitt und eine separate perspektivische Ansicht eines Eck-Grundprofils;
- Fig. 8: die Darstellung eines zweiten erfindungsgemäßen Plattenmontagesystems mit einem Eck-Grundprofil und zwei Platten unterschiedlicher Stärke;
- Fig. 9: einen separaten Querschnitt und eine separate perspektivische Ansicht eines Abschluss-Grundprofils;
- Fig. 10: die Darstellung eines dritten erfindungsgemäßen Plattenmontagesystems mit einem Abschluss-Grundprofil und einer dünnen Platte;
- Fig. 11: eine Ansicht eines ersten Platten/Rohr-Montagesystems mit Plattenmontagesystemen und einem ersten Rohrmontagesystem gemäß der vorliegenden Erfindung;
- Fig. 12: eine Explosionsdarstellung des ersten erfindungsgemäßen Rohrmontagesystems von Figur 11 mit L-förmigem Verbinder;
- Fig. 13: eine Aufsicht auf das erste Platten/Rohr-Montagesystem von Figur 11;
- Fig. 14: einen Schnitt entlang der Linie XIV-XIV von Figur 13;
- Fig. 15: eine Explosionsdarstellung eines zweiten erfindungsgemäßen Rohrmontagesystems mit T-förmigem Verbinder;
- Fig. 16: eine teilweise Explosionsdarstellung eines zweiten erfindungsgemäßen Platten/Rohr-Montagesystems mit separater Blende;
- Fig. 17: das Platten/Rohr-Montagesystems von Figur 16 im montierten Zustand.

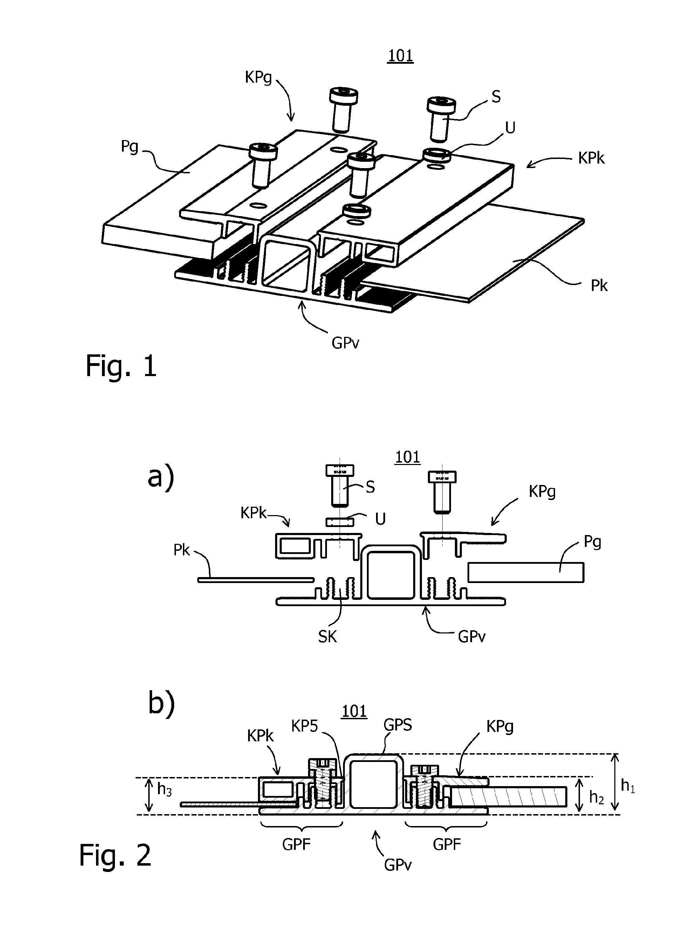

Im Folgenden wird mit Hilfe der Figuren 1 bis 10 zunächst ein Plattenmontagesystem gemäß dem ersten Aspekt der vorliegenden Erfindung erläutert.

Die Figuren 1 bis 3 zeigen eine erste spezielle Ausführungsform eines derartigen Plattenmontagesystems 101 mit zwei eingesetzten Platten Pk und Pg. Das erfindungsgemäße Plattenmontagesystem enthält allgemein zwei Grundelemente, nämlich:
1. Ein Grundprofil mit einem Stamm GPS und mindestens einem davon abstehenden Flügel GPF.
2. Ein Klemmprofil KPk, KPg (pro Flügel des Grundprofils).

Die Klemmprofile sind dabei über geeignete Verbindungsmittel mit den Flügeln des Grundprofils verbunden, wobei die Höhe h1 des Stamms GPS des Grundprofils (bezogen auf die Ebene der Flügel GPF) im zusammengebauten Zustand größer oder gleich der Höhe h2 (bzw. h3) ist des "Sandwichs" aus Flügel GPF, Platte Pg (bzw. Pk) und Klemmprofil KPg (bzw. KPk) (vgl. Figur 2b).

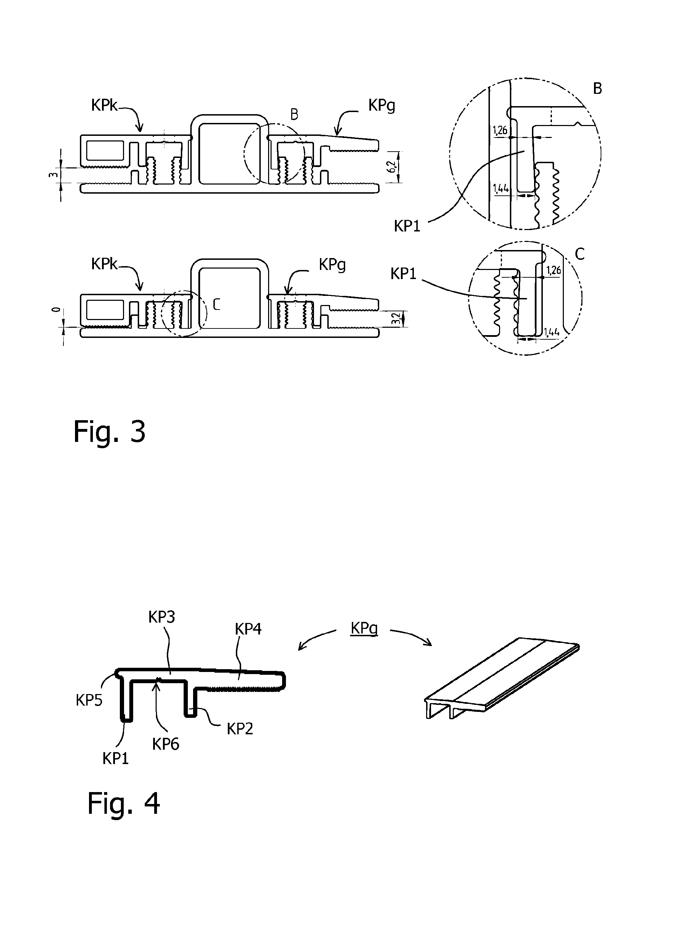

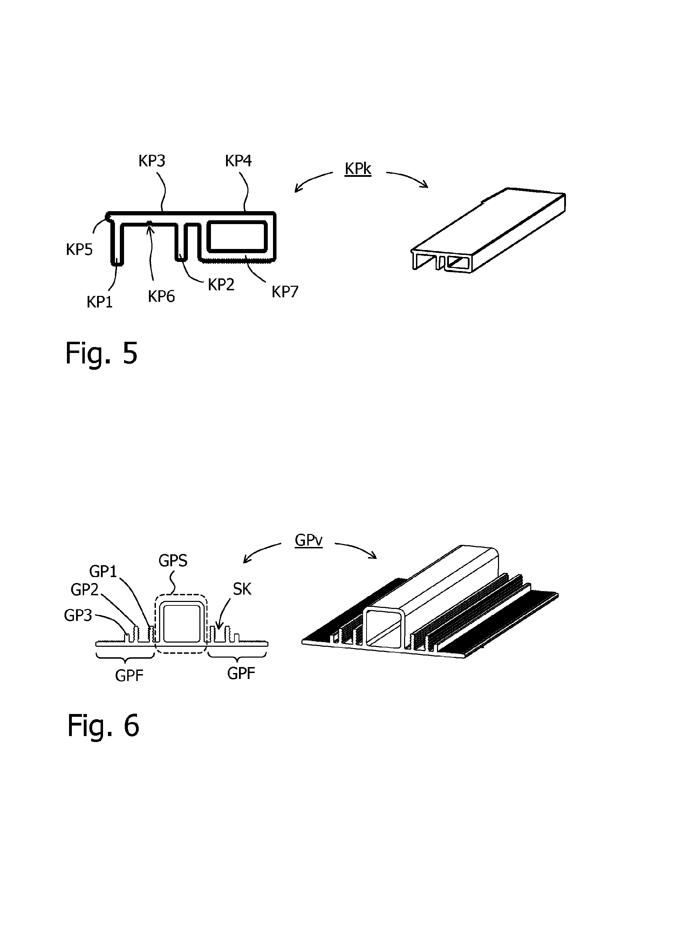

In der dargestellten Ausführungsform gibt es zwei unterschiedliche Typen von Klemmprofilen, nämlich ein "großes" Klemmprofil KPg (Figur 4) für dicke Platten Pg und ein "kleines" Klemmprofil KPk (Figur 5) für dünnere Platten Pk. Beiden Klemmprofilen gemeinsam ist ein Aufbau aus im Wesentlichen den folgenden Elementen:
- Einem sich im Montagezustand parallel zur Plattenebene erstreckenden ersten Schenkel KP3, der durch einen zweiten Schenkel KP4 fortgesetzt wird. Der zweite Schenkel KP4 überlappt im Montagezustand eine eingesetzte Platte.
- Zwei Stege KP1 und KP2, die senkrecht vom ersten Schenkel KP3 abstehen.
   Die beiden Stege KP1, KP2 bilden (zweite) Verbindungsmittel, die mit (ersten) Verbindungsmitteln am Grundprofil zusammenwirken können, um das Klemmprofil mit einem Grundprofil zu verbinden.

Der Unterschied zwischen den beiden Typen von Klemmprofilen KPk und KPg besteht darin, dass beim "kleinen" Klemmprofil KPk ein Füllkörper KP7 vorhanden ist, der im Beispiel durch einen rechtwinklig begrenzten Hohlraum gebildet wird. Im Gegensatz dazu ist beim "großen" Klemmprofil KPg nur der zweite Schenkel KP4 vorhanden.

An der der Platte zugewandten Seite (Unterseite des zweiten Schenkels KP4 bzw. des Füllkörpers KP7) können die Klemmprofile jeweils eine Riffelung oder Aufrauung aufweisen, um die Platte fester zu greifen.

In Figur 2b ist erkennbar, dass sich die Klemmprofile KPk, KPg über ein in Richtung des Stammes GPS abstehendes Kontaktelement in Form einer Nase KP5 am Stamm GPS des Grundprofils GPv abstützen. Durch diese Abstützung wird ein Ausgleich für ein Drehmoment erzielt, welches von den eingesetzten Platten Pk, Pg auf die jeweiligen Klemmprofile KPk, KPg ausgeübt wird.

Einem entsprechenden Gegen-Kippmoment dient auch die konische Ausbildung der an den Stamm GPS eines Grundprofils angrenzenden Stege KP1 der Klemmprofile. Dies ist in den Darstellungen von Figur 3 erkennbar. Die Verringerung der Dicke des Steges KP1 von seinem freien Ende, wo er beispielsweise eine Dicke von 1.44 mm hat, zu seiner Wurzel hin, wo er beispielsweise eine Dicke von 1.26 mm hat, schafft den nötigen Raum für eine (Gegen-) Kippwirkung.

Das Plattenmontagesystem 101 enthält als Grundprofil speziell ein "Verbindungs-Grundprofil" GPv. Das in Figur 6 separat dargestellte Verbindungs-Grundprofil GPv weist einen als Quadratrohr ausgebildeten Stamm GPS auf, von dem in einer gemeinsamen Ebene an gegenüberliegenden Seiten zwei spiegelsymmetrisch ausgebildete Flügel GPF abstehen. Die Flügel tragen (erste) Verbindungsmittel in Form von zwei senkrecht nach oben abstehenden, voneinander beabstandeten Wänden GP1 und GP2. Der Abstand dieser Wände ist so, dass sie passend zwischen die beiden Stege KP1 und KP2 der Klemmprofile geschoben werden können. Durch Rillen an der Außenseite der Grundprofil-Wände GP1, GP2 sowie durch eine nach innen vorstehende Nase am unteren Ende der Klemmprofil-Stege KP1 und KP2 wird dabei eine Rastverbindung zwischen Klemmprofil und Grundprofil erreicht.

Durch die vorgenannte Rastverbindung kann im Rahmen einer Vormontage ein Klemmprofil auf das Grundprofil aufgesteckt und eine Platte provisorisch im Klemmspalt zwischen Schenkel KP4 und Flügel GPF eingespannt werden. Sobald die endgültige Ausrichtung erreicht ist, kann dann eine dauerhafte Fixierung des Klemmprofils am Grundprofil erfolgen. Dies ist im dargestellten Beispiel durch eine Schraubverbindung möglich. Dabei wird eine Schraube S (Figur 2) durch ein Schraubloch im Klemmprofil KPk bzw. KPg geführt, so dass sie in den zwischen den beiden Wänden GP1 und GP2 des Grundprofils GPv ausgebildeten Schraubkanal SK eingreift. Vorzugsweise weist der Schraubkanal SK an seiner Innenseite Rillen auf, die als Gegengewinde für eine (metrische) Schraube S dienen können. Optional kann die Schraube aber auch ein selbstschneidendes Gewinde haben, das sich in die Innenwände des Schraubkanals eingräbt. Um an einer gewünschten Stelle einfacher ein Schraubloch in ein Klemmprofil KPk oder KPg einbringen zu können, weist Letzteres vorzugsweise entlang der möglichen Linie für potentielle Schraublöcher eine Führungsrille KP6 auf (Figur 4, 5).

Das Grundprofil GPv besitzt weiterhin einen Anschlag GP3, welcher nach oben (d. h. in Richtung einer eingesetzten Platte) vom Flügel GPF absteht. Wie aus Figur 2b erkennbar ist, kann eine Platte Pk bzw. Pg durch Anlegen an diesen Anschlag in eine definierte Position gebracht werden.

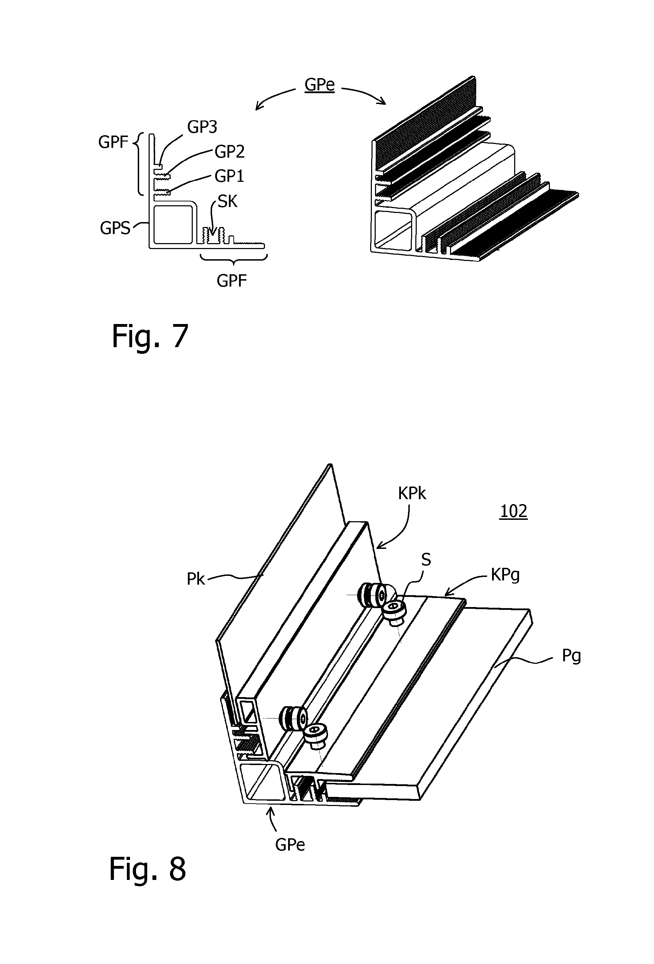

Andere Plattenmontagesysteme können insbesondere durch andere Arten von Grundprofilen erzeugt werden. Das in Figur 7 dargestellte Eck-Grundprofil GPe unterscheidet sich z. B. vom Verbindungs-Grundprofil GPv dadurch, dass die zwei Flügel GPF in einem rechten Winkel zueinander stehen, wobei beide Flügel an diagonal gegenüberstehenden Ecken des quadratischen Stammes GPS ansetzen.

Wie das zweite Plattenmontagesystem 102 von Figur 8 illustriert, können mit dem Eck-Grundprofil GPe zwei Platten unter einem Winkel von 90° miteinander verbunden werden.

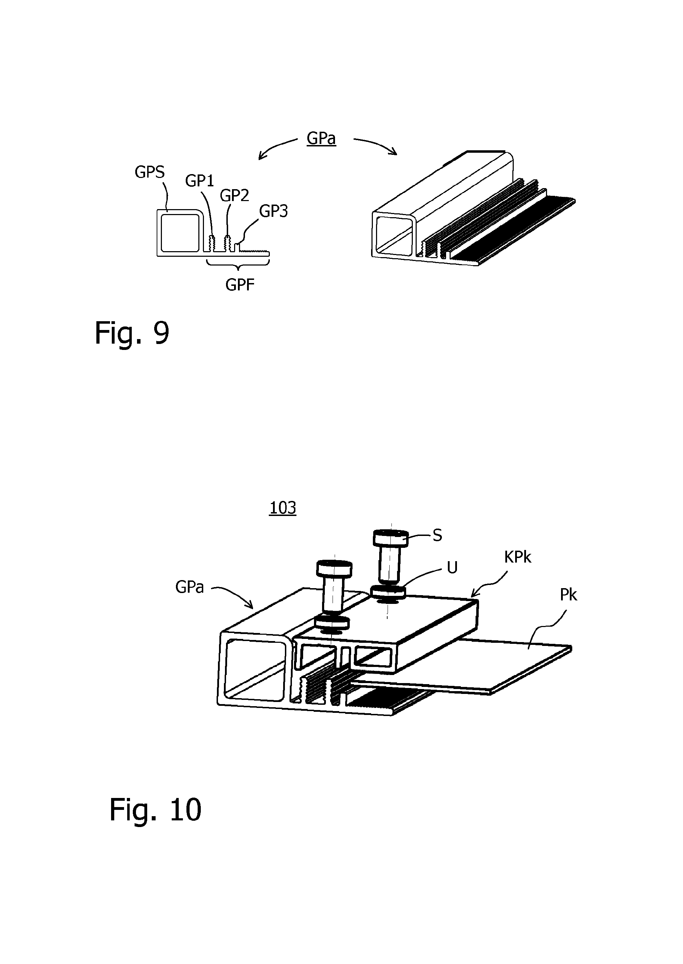

Das in Figur 9 gezeigte Abschluss-Grundprofil GPa ist ähnlich wie das Verbindungs-Grundprofil GPv ausgebildet mit dem Unterschied, dass es nur einen Flügel GPF hat.

Wie das dritte Plattenmontagesystem 103 von Figur 10 illustriert, kann mit dem Abschluss-Grundprofil GPa am Rand einer Platte Pk ein Abschluss (ohne Fortsetzung mit einer weiteren Platte) erzeugt werden.

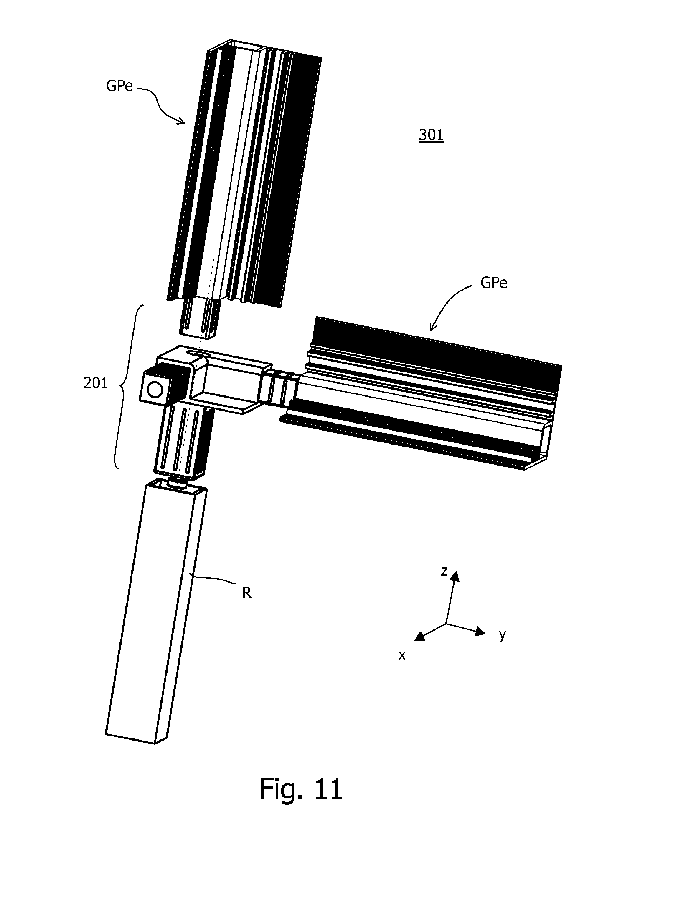

Nachfolgend werden unter Bezugnahme auf die Figuren 11 bis 17 ein Rohrmontagesystem gemäß dem zweiten und dritten Aspekt der vorliegenden Erfindung sowie ein Platten/Rohr-Montagesystem gemäß dem vierten Aspekt der Erfindung beschrieben.

Figur 11 zeigt in einer perspektivischen Explosionsdarstellung ein erstes Platten/Rohr-Montagesystem 301. Dieses enthält
- zwei Eck-Grundprofile GPe der oben beschriebenen Art;
- ein erstes Rohrmontagesystem 201;
- (optional) ein Rohr R.

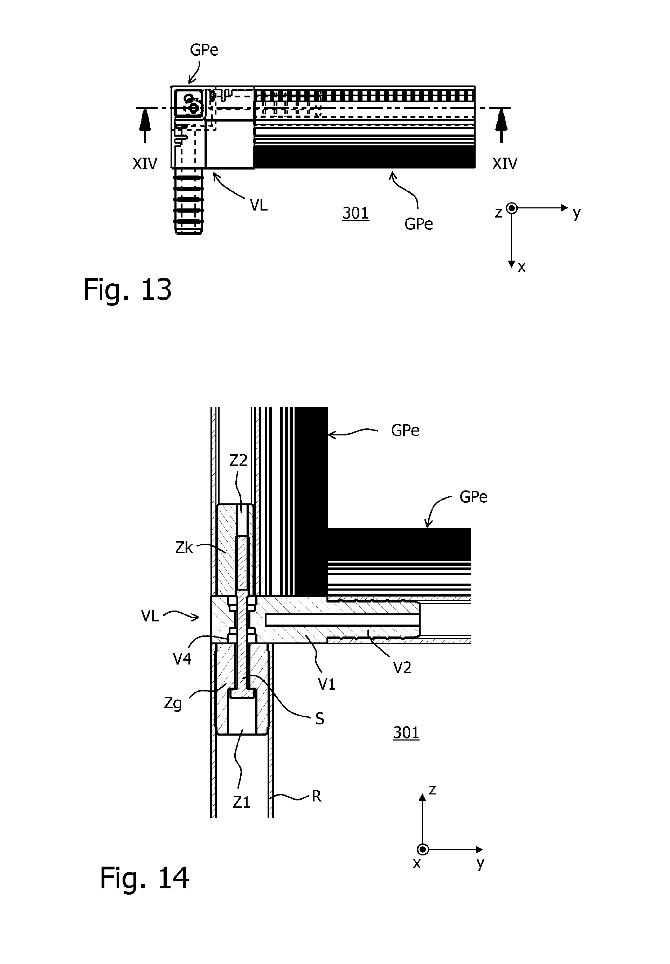

Die Figuren 13 und 14 zeigen eine Aufsicht von oben auf das Platten/RohrMontagesystem 301 von Figur 11 sowie einen Schnitt durch die Ebene der Grundprofile GPe.

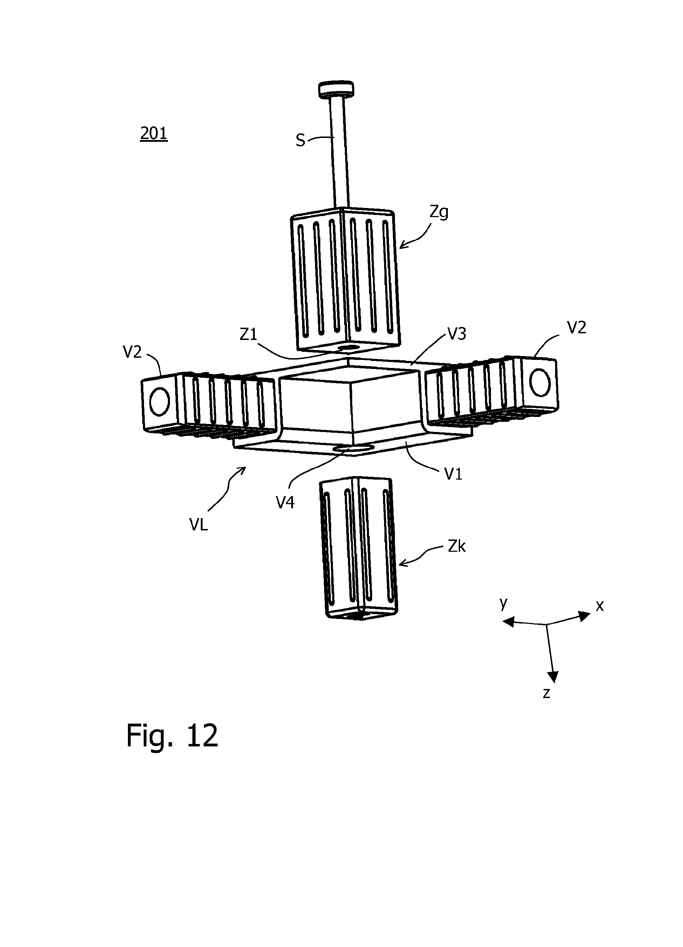

Das erste Rohrmontagesystem 201 ist in Figur 12 separat dargestellt und ist gekennzeichnet durch folgende Komponenten:
- Einen Verbinder VL, welcher im dargestellten Beispiel eine Verbinderbasis V1 mit zwei rechtwinklig davon abstehenden Zapfen V2 enthält, auf die ein Rohr gesteckt werden kann (nicht dargestellt).
- Mindestens einen Zusatzzapfen Zg bzw. Zk, welcher optional zusätzlich am Verbinder VL befestigt werden kann.
- Eine Blende V3, welche im dargestellten Beispiel integral mit der Verbinderbasis V1 ausgebildet ist und dazu dient, durch den Verbinder gekoppelte Bauteile teilweise zu verdecken. Die quadratische, ebene Blende V3 ist bündig im Eckbereich des Verbinders VL angeordnet und erstreckt sich bis zum Beginn der Zapfen V2.

Auf die Zapfen V2 sowie die Zusatzzapfen Zg, Zk können Rohre dazu passenden Querschnitts gesteckt werden, um diese miteinander zu koppeln. Durch die optional anbringbaren Zusatzzapfen Zg, Zk kann dabei die räumliche Konfiguration des zusammengesetzten Verbindungskörpers nach Bedarf variiert werden. Aus wenigen Grundbauteilen (Verbinder VL, Zusatzzapfen Zg, Zk) können daher zahlreiche unterschiedliche Gesamtkonfigurationen hergestellt werden.

Die Zapfen V2 und die Zusatzzapfen Zg, Zk weisen an ihrer Außenseite Stege auf, die zum Toleranzausgleich und zum kraftschlüssigen Sitz in einem entsprechenden Quadratrohr dienen.

In der Ecke der Verbinderbasis V1 ist senkrecht zur Ebene des Verbinders VL ein Durchgangsloch V4 vorgesehen, das an seinen Ausgängen vorzugsweise eine Vergrößerung bzw. eine Sechskant-Tasche für die Aufnahme einer Schraubenmutter aufweist. Durch das Schraubloch V4 kann wie in Figur 12 angedeutet eine Schraube S geführt werden, um einen oder zwei Zusatzzapfen Zg, Zk am Verbinder VL zu befestigen.

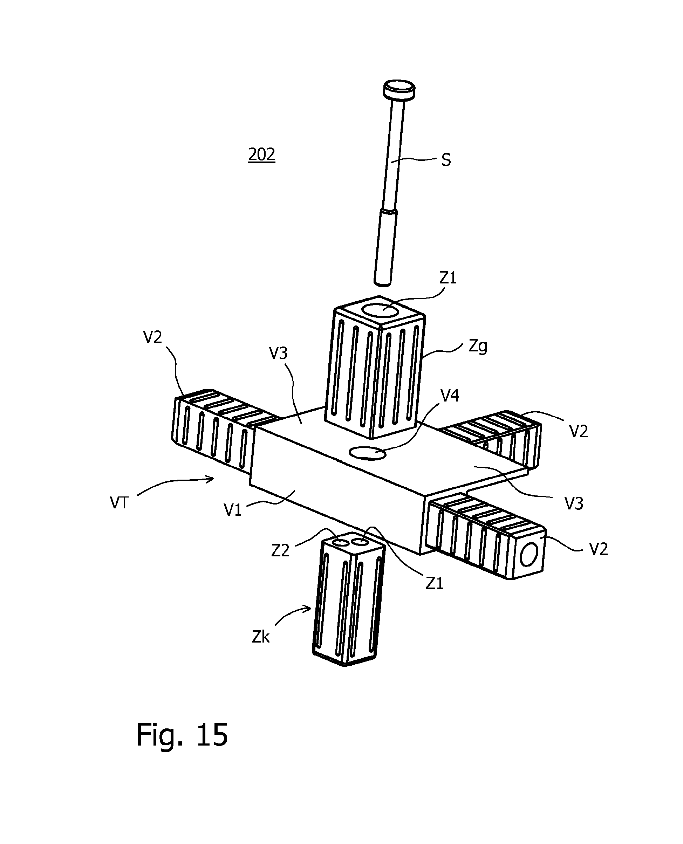

Figur 15 zeigt ein zweites Rohrmontagesystem 202 mit einem anderen Typ von Verbinder VT, bei welchem von einer Verbinderbasis V1 drei Zapfen V2 T-förmig abstehen. Weiterhin sind in den beiden Ecken des "T" zwei quadratische Blenden V3 angeordnet.

Senkrecht zur Ebene des Verbinders VT ist im Mittelpunkt des Verbinders ein Schraubloch V4 vorgesehen. Bei einer abgewandelten Ausführungsform kann auf der Seite der Blenden V3 das Schraubloch V4 zunächst verschlossen sein (nicht dargestellt). Nur falls ein Zusatzzapfen angebracht werden soll, kann die (dünne) Verschlussdecke des Loches durchbrochen und die Durchführung einer Schraube damit ermöglicht werden. Des Weiteren können optional kreisförmige Deckel bereitgestellt werden, mit denen unbenutzte Schraublöcher an einem Verbinder geschlossen werden können. Diese Möglichkeiten gibt es analog natürlich auch bei anderen Verbindertypen (z. B. VL).

Die Rohrmontagesysteme 201, 202 der Figuren 12 und 15 enthalten einen Zusatzzapfen Zg, welcher für die Aufnahme "großer" Rohre (z. B. 20 x 20 mm) eingerichtet ist. Der Zusatzzapfen Zg weist eine in Längsrichtung durchgehende zentrische Bohrung Z1 auf, die auf der Außenseite eine Vertiefung zur Aufnahme eines Schraubenkopfes bzw. einer Sechskantmutter hat.

Ferner enthalten die Rohrmontagesysteme 201, 202 einen zweiten

Zusatzzapfen Zk, welcher zur Aufnahme "kleiner" Rohre (z. B. 12.5 x 12.5 mm) geeignet ist. Der kleinere Zusatzzapfen Zk hat zwei parallele, exzentrisch entlang seiner Längsachse verlaufende Bohrungen Z1 und Z2, die an einem Ende eine Vertiefung zur Aufnahme eines Schraubenkopfes aufweisen. Die exzentrische Lage der Durchgangslöcher Z1 und Z2 ist dadurch bedingt, dass dieser Zapfen oft nicht zentral über dem Durchgangsloch V4 der Verbinder sitzen soll, sondern in Richtung der Ecke des Verbinders versetzt sein muss.

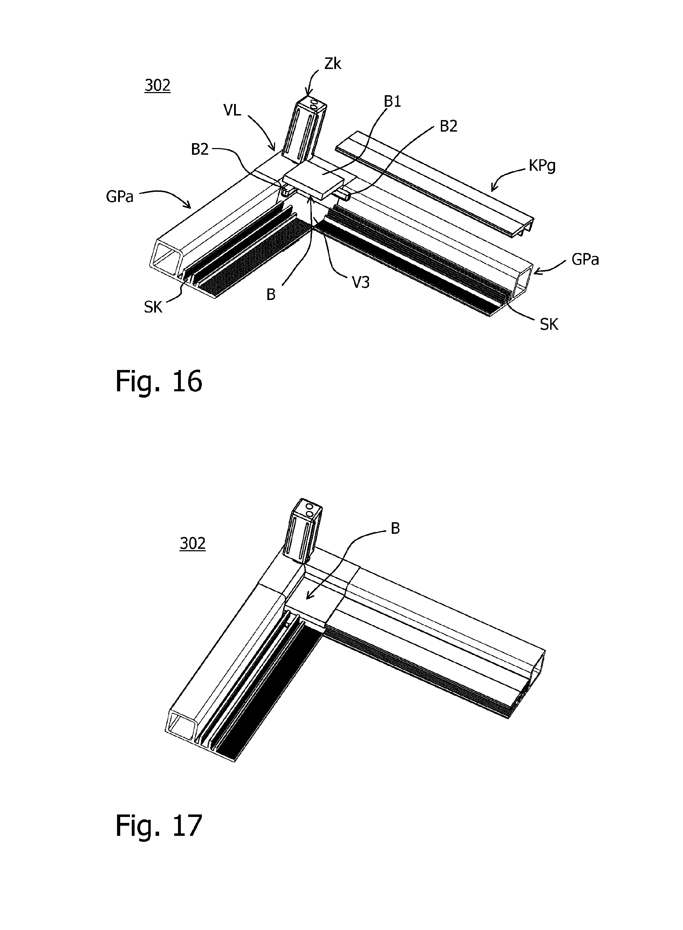

Die Figuren 16 und 17 zeigen ein zweites Platten/Rohr-Montagesystem 302, das aus einer Kombination von Plattenmontagesystemen nach den Figuren 7 bis 8 (mit Abschluss-Grundprofilen GPa) mit einem Rohrmontagesystem nach Figur 12 (mit L-förmigem Verbinder VL) entsteht. Alternativ könnten natürlich auch andere Plattenmontagesysteme und/oder Rohrmontagesysteme kombiniert werden.

Durch das Plattenmontagesystem können zum einen die Ränder von Platten eingefasst und sauber abgeschlossen sowie mehrere Platten entlang der Kanten verbunden werden. Eine Verbindung des Plattenmontagesystems untereinander - und damit der eingeklemmten Platten - kann sodann mit Hilfe des Rohrmontagesystems erfolgen, wobei aus Verbindern VL bzw. VT und Zusatzzapfen Zg bzw. Zk zusammengesetzte Verbindungskörper entsprechend der benötigten räumlichen Konfiguration eingesetzt werden. Wie aus den Figuren 16 und 17 erkennbar ist, sind die Ecken, in denen die Platten zusammenkommen, durch die Blende V3 am Verbinder bzw. eine separate Blende B optisch und mechanisch sauber abgedeckt. Die separate Blende B enthält eine rechteckige Blendenfläche B1 und zwei Klemmstäbe B2. Die Klemmstäbe B2 der separaten Blende B werden dabei jeweils in den Schraubkanal SK des angrenzenden Grundprofils GPa gepresst (oder eines Verbindungs-Grundprofils GPv oder Eck-Grundprofils GPe). Die separate Blende B kann in diesem Zusammenhang vorteilhafterweise auch die Vorfixierung einer Platte bewirken.

### Bezugszeichenliste:

- 101,102,103: Plattenmontagesystem
- 201, 202: Rohrmontagesystem
- 301, 302: Platten/Rohr-Montagesystem
- GPv: Verbindungs-Grundprofil
- GPe: Eck-Grundprofil
- GPa: Abschluss-Grundprofil
- GPS: Stamm des Grundprofils
- GPF: Flügel des Grundprofils
- GP1, GP2: Wände des Schraubkanals am Grundprofil
- GP3: Anschlag am Grundprofil
- SK: Schraubkanal (am Grundprofil)
- KPk: Klemmprofil für kleine Platten
- KPg: Klemmprofil für große Platten
- KP1, KP2: Stege am Klemmprofil
- KP3, KP4: Schenkel am Klemmprofil
- KP5: Kontaktnase am Klemmprofil
- KP6: Führungsrille am Klemmprofil
- KP7: Füllkörper am Klemmprofil
- VL: L-förmiger Verbinder
- VT: T-förmiger Verbinder
- V1: Verbinderbasis
- V2: integrierter Zapfen am Verbinder
- V3: integrierte Blende am Verbinder
- V4: Schraubloch am Verbinder
- Zk: Zusatzzapfen für kleine Rohre
- Zg: Zusatzzapfen für große Rohre
- Z1, Z2: Schraublöcher im Zusatzzapfen
- B: separate Blende
- B1: Blendenfläche
- B2: Klemmstab an der Blende
- R: Rohr
- S: Schraube
- U: Unterlegscheibe

## Patentansprüche

1. Plattenmontagesystem (101, 102, 103), enthaltend:
- ein Grundprofil (GPv, GPe, GPa) mit einem Stamm (GPS) und mindestens einem davon abstehenden Flügel (GPF);
- ein Klemmprofil (KPg, KPk), das am Flügel befestigt werden kann und dabei zwischen sich und dem Flügel eine Platte (Pg, Pk) einklemmen kann.

2. Plattenmontagesystem (101, 102, 103) nach Anspruch 1,
**dadurch gekennzeichnet, dass** die Dicke (h₁) des Stamms (GPS) des Grundprofils (GPv, GPe, GPa) senkrecht zur Ebene des Flügels (GPF) mindestens so groß ist wie die Dicke (h₂, h₃) des am Flügel befestigten Klemmprofils (KPg, KPk).

3. Plattenmontagesystem (101, 102, 103) nach Anspruch 1 oder 2,
**dadurch gekennzeichnet, dass** der Stamm (GPS) im Wesentlichen durch ein Rohr gebildet wird, insbesondere durch ein Quadratrohr.

4. Plattenmontagesystem (101, 102, 103) nach mindestens einem der Ansprüche 1 bis 3,
**dadurch gekennzeichnet, dass** am Flügel (GPF) erste Verbindungsmittel (GP1, GP2) und am Klemmprofil (KPg, KPk) dazu kompatible zweite Verbindungsmittel (KP1, KP2) ausgebildet sind.

5. Plattenmontagesystem (101, 102, 103) nach Anspruch 4,
**dadurch gekennzeichnet, dass** die ersten und/oder die zweiten Verbindungsmittel einen zwischen zwei Wänden (GP1, GP2) ausgebildeten Schraubkanal (SK) zur Aufnahme einer Verbindungsschraube (S) aufweisen, wobei der Schraubkanal (SK) vorzugsweise an seiner Innenseite Rillen zur Aufnahme eines Schraubengewindes aufweist.

6. Plattenmontagesystem (101, 102, 103) nach mindestens einem der Ansprüche 4 bis 5,
**dadurch gekennzeichnet, dass** die ersten und zweiten Verbindungsmittel Kippmittel (KP5) enthalten, welche einem von einer eingesetzten Platte (Pg, Pk) auf das Klemmprofil (KPg, KPk) ausgeübten Drehmoment entgegenwirken.

7. Plattenmontagesystem (101, 102, 103) nach Anspruch 6,
**dadurch gekennzeichnet, dass** das Kippmittel ein Kontaktelement (KP5) enthält, über welches das Klemmprofil (KPg, KPk) den Stamm (GPS) des Grundprofils (GPv, GPe, GPa) kontaktiert.

8. Plattenmontagesystem (101, 102, 103) nach Anspruch 6,
**dadurch gekennzeichnet, dass** das die ersten und/oder die zweiten Verbindungsmittel zwei beabstandete Stege (GP1, GP2, KP1, KP2) aufweisen, und dass das Kippmittel eine asymmetrische, insbesondere konische Ausbildung mindestens eines Steges (KP1, KP2) umfasst.

9. Rohrmontagesystem (201, 202) enthaltend einen Verbinder (VL, VT) mit mindestens einem Zapfen (V2), auf den ein Rohr (R) aufgesteckt werden kann,
**gekennzeichnet durch** mindestens einen Zusatzzapfen (Zk, Zg), welcher optional am Verbinder befestigt werden kann.

10. Rohrmontagesystem (201, 202) nach Anspruch 9,
**dadurch gekennzeichnet, dass** der Zusatzzapfen (Zk, Zg) in verschiedenen Positionen am Verbinder (VL, VT) befestigt werden kann.

11. Rohrmontagesystem (201, 202), insbesondere nach mindestens einem der Ansprüche 9 bis 10, enthaltend einen Verbinder (VL, VT) mit mindestens einem Zapfen (V2), auf den ein Rohr (R) aufgesteckt werden, **gekennzeichnet durch** mindestens eine Blende (V3, B), mit welcher mit dem Verbinder (VL, VT) gekoppelte Bauteile abgedeckt werden können.

12. Rohrmontagesystem (201, 202) nach Anspruch 11,
**dadurch gekennzeichnet, dass** die Blende (V3) integral mit dem Verbinder (VL, VT) ausgebildet ist.

13. Rohrmontagesystem (201, 202) nach Anspruch 11 oder 12,
**dadurch gekennzeichnet, dass** die Blende (B) ein separates Bauelement ist mit Mitteln (B2) zur Verbindung mit dem Verbinder (VL, VT) und/oder einem damit gekoppelten Bauteil (GPa).

14. Rohrmontagesystem (201, 202) nach mindestens einem der Ansprüche 9 bis 13,
**dadurch gekennzeichnet, dass** der Zapfen (V2) und/oder der Zusatzzapfen (Zk, Zg) zum Einstecken in den rohrförmigen Stamm (GPS) eines Grundprofils (GPv, GPe, GPa) nach Anspruch 3 eingerichtet ist.

15. Platten/Rohr-Montagesystem (301, 302) enthaltend
a) ein Plattenmontagesystem (101, 102, 103) nach mindestens einem der Ansprüche 3 bis 8;
b) ein Rohrmontagesystem (201, 202) nach Anspruch 14.
